# EUROPEAN PATENT SPECIFICATION

(11) **EP 1 630 638 B1**
(45) Date of publication and mention of the grant of the patent: **19.09.2007**
(21) Application number: 04255193.7
(22) Date of filing: 27.08.2004
(51) Int. Cl.: G06F 1/00

(54) **User-defined passwords having associated unique version data to assist user recall of the passwords**
Benutzerdefinierte Passwörter mit eindeutigem Versionsdatum, um dem Benutzer zu helfen, sich sein Passwort zu merken
Mots de passe définis par l'utilisateur et associés à une donnée unique de version lui permettant de se les remémorer

(43) Date of publication of application: 01.03.2006
(73) Proprietor: Research In Motion Limited, Waterloo, Ontario N2L 3W8 (CA)
(72) Inventor: Brown, Michael K., Kitchener, Ontario N2M 2Z2 (CA); Little, Herbert A., Waterloo, Ontario N2T 2V8 (CA); Kirkup, Michael G., Waterloo, Ontario N2K 3X5 (CA)
(74) Representative: Hibbert, Juliet Jane Grace

(56) References cited:
- WO-A-01/44916
- US-A- 5 345 549
- US-A- 5 425 102
- US-B1- 6 370 649

## Description

### BACKGROUND

### 1. Technical Field

This invention relates to apparatus, method and stored computer program media effecting password-protected functionality.

### 2. Description of Related Art

Modem electronic devices often have password-protected functionality. In many cases, the currently effective password may be user-defined. However, this may present a severe difficulty or at least nuisance if the user cannot later recall the correct password.

The problem may be even more severe with devices having a user's private keys encrypted with a Key Store password coupled with an ability to back up and restore encrypted copies of those private cryptographic keys. This is especially problematic where the user may change the password from time-to-time and then, after having restored from backup some older private cryptographic key set, not being able to recall which password is correctly associated with that particular set of restored cryptographic keys. Furthermore, there is at least a potential problem in causing the device to use the correct one of several possible prior passwords during user attempts to decrypt restored keys.

Others have proposed storing password recollection hints or clues generated by the user at the time each password is defined by the user. Such pre-stored user-hints can then be supplied back to the user if there is difficulty in recalling a particular password. However, such user-generated hints may not always be generated and/or may be of deficient security because of different skill levels of users in devising appropriate password hints that are not overly suggestive to strangers. Examples of such prior systems utilizing user-generated password hints include US-A-5,425,102, US-A-5,345,549 and WO-A-01/44916.

### SUMMARY

We solve such problems by automatically defining unique password "version" data with a user-defined password. For example, an integer may be stored with the encrypted copy of some data (e.g., private cryptographic keys) to help the user identify which password was used to protect that particular data.

In order to make the system user friendly, one possibility is to simply use the date/time that a particular password was first defined by the user as the password version data. A counter may be incremented and/or decremented to provide unique version data as well. However, when the date/time data (e.g., the continuously increasing chronological date and/or time of day) is used, this helps provide a better clue to jog the user's memory. In particular, it provides a clue to the user without revealing any useful information about the password to an attacker. Providing a clue defined by the user or otherwise (e.g., "your password begins with a "m" and ends with "wave",") might be helpful to the user but also may aid an attacker in determining the password.

In particular, instead of merely asking some generic question (e.g., "This key was protected with an older password. Please enter it to decrypt the key."), the exemplary embodiment of this invention may instead ask a more pertinent and useful question without revealing any useful information to an attacker (e.g., "This key was protected with a password from June 1, 2004. Please enter it to decrypt the key.").

This invention may be embodied in hardware, software or a combination of hardware and software. The invention also provides a method for giving improved password control by storing a user-specified password in association with unique version data that is subsequently provided to help user recall of the password associated therewith.

### BRIEF DESCRIPTION OF THE DRAWINGS

These and other objects and advantages of this invention will be more completely understood and appreciated by careful study of the following more detailed description of at least one exemplary embodiment in conjunction with the accompanying drawings, in which:
FIG. **1** is an overall system wide schematic view of an exemplary wireless email communication system incorporating a mobile wireless communication device having passwords associated with version data to assist user recall in accordance with one exemplary embodiment of this invention;
FIG. **2** is an abbreviated schematic diagram of hardware included within an exemplary mobile wireless communication device of FIG. **1**;
FIG. **3** is an exemplary abbreviated schematic flow chart of computer software (i.e., program logic) that may be utilized in the device of FIG. **2** for a password checking routine;
FIG. **4** is an exemplary abbreviated schematic flow chart of computer software (i.e., program logic) that may be utilized in the device of FIG. **2** to provide a routine for entry of new user-defined passwords;
FIG. **5** is an exemplary abbreviated schematic flow chart of computer software (i.e., program logic) that may be utilized in the device of FIG. **2** to provide password protected storage of encrypted data;
FIG. **6** is an exemplary abbreviated schematic flow chart of computer software (i.e., program logic) that may be utilized in the device of FIG. **2** to provide for user retrieval of password protected encrypted and stored data; and
FIG. 7 is an exemplary abbreviated schematic flow chart of computer software (i.e., program logic) that may be utilized in the device of FIG. **2** to provide an easy option to re-encrypt backup-restored private keys under the latest current password.

### DETAILED DESCRIPTION OF EXEMPLARY EMBODIMENTS

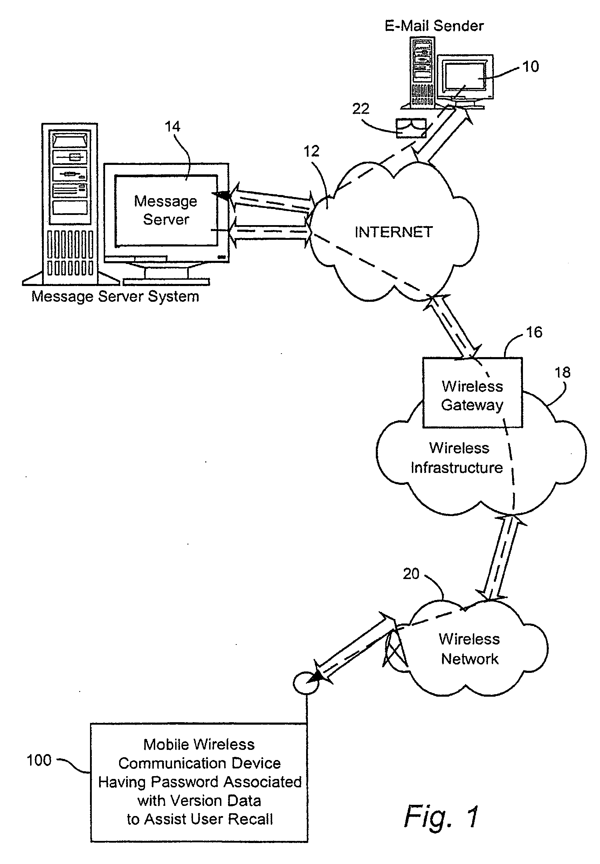

FIG. **1** is an overview of an exemplary communication system in which a wireless communication device **100** may be used in accordance with this invention. One skilled in the art will appreciate that there may be hundreds of different system topologies. There may also be many message senders and recipients. The simple exemplary system shown in FIG. **1** is for illustrative purposes only, and shows perhaps the currently most prevalent Internet e-mail environment.

FIG. **1** shows an e-mail sender **10**, the Internet **12**, a message server system **14**, a wireless gateway **16**, wireless infrastructure **18**, a wireless network **20** and a mobile communication device **100**.

An e-mail sender **10** may, for example, be connected to an ISP (Internet Service Provider) on which a user of the system has an account, located within a company, possibly connected to a local area network (LAN), and connected to the Internet **12**, or connected to the Internet **12** through a large ASP (application service provider) such as American Online^{™} (AOL). Those skilled in the art will appreciate that the systems shown in FIG. **1** may instead be connected to a wide area network (WAN) other than the Internet, although e-mail transfers are commonly accomplished through Internet-connected arrangements as shown in FIG. **1**.

The message server **14** may be implemented, for example, on a network computer within the firewall of a corporation, a computer within an ISP or ASP system or the like, and acts as the main interface for e-mail exchange over the Internet **12**. Although other messaging systems might not require a message server system **14**, a mobile device **100** configured for receiving and possibly sending e-mail will normally be associated with an account on a message server. Perhaps the two most common message servers are Microsoft Exchange^{™} and Lotus Domino^{™}. These products are often used in conjunction with Internet mail routers that route and deliver mail. These intermediate components are not shown in FIG. **1,** as they do not directly play a role in the invention described below. Message servers such as server **14** typically extend beyond just e-mail sending and receiving; they also include dynamic database storage engines that have predefined database formats for data like calendars, to-do lists, task lists, e-mail and documentation.

The wireless gateway **16** and infrastructure **18** provide a link between the Internet **12** and wireless network **20.** The wireless infrastructure **18** determines the most likely network for locating a given user and tracks the users as they roam between countries or networks. A message is then delivered to the mobile device **100** via wireless transmission, typically at a radio frequency (RF), from a base station in the wireless network **20** to the mobile device **100.** The particular network **20** may be virtually any wireless network over which messages may be exchanged with a mobile communication device.

As shown in FIG. **1,** a composed e-mail message **22** is sent by the e-mail sender **10,** located somewhere on the Internet **12.** This message **22** typically uses traditional Simple Mail Transfer Protocol (SMTP), RFC **822** headers and multipurpose Internet Mail Extension (MIME) body parts to define the format of the mail message. These techniques are all well known to those skilled in the art. The message **22** arrives at the message server **14** and is normally stored in a message store. Most known messaging systems support a so-called "pull" message access scheme, wherein the mobile device **100** must request that stored messages be forwarded by the message server to the mobile device **100.** Some systems provide for automatic routing of such messages which are addressed using a specific e-mail address associated with the mobile device **100.** In a preferred embodiment, messages addressed to a message server account associated with a host system such as a home computer or office computer which belongs to the user of a mobile device **100** are redirected from the message server **14** to the mobile device **100** as they are received.

Regardless of the specific mechanism controlling forwarding of messages to mobile device **100,** the message **22,** or possibly a translated or reformatted version thereof, is sent to wireless gateway 16. The wireless infrastructure **18** includes a series of connections to wireless network **20.** These connections could be Integrated Services Digital Network (ISDN), Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Division Multiple Access (CDMA) networks, (2) the Group Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric network include the Mobitex^{™} Radio Network and the DataTAC^{™} Radio Network. Examples of older voice-centric data networks include Personal Communication Systems (PCS) networks like GSM, and TDMA systems.

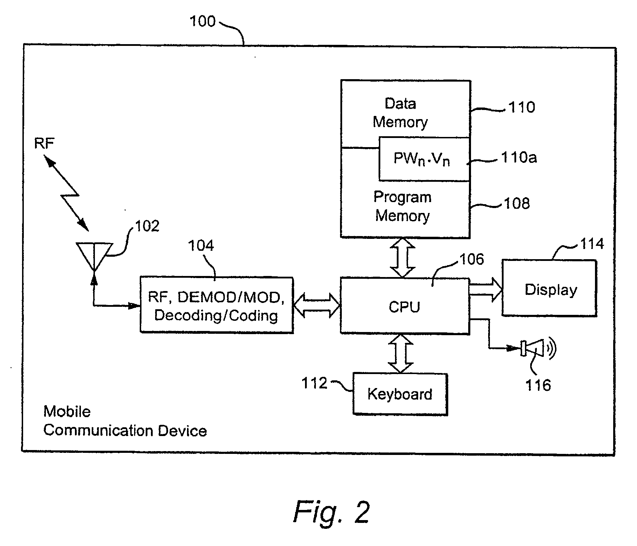

As depicted in FIG. **2,** mobile communication device **100** includes a suitable RF antenna **102** for wireless communication to/from wireless network **20.** Conventional RF, demodulation/modulation and decoding/coding circuits **104** are provided. As those in the art will appreciate, such circuits can involve possibly many digital signal processors (DSPs), microprocessors, filters, analog and digital circuits and the like. However, since such circuitry is well known in the art, it is not further described.

The mobile communication device **100** will also typically include a main control CPU **106** which operates under control of a stored program in program memory **108** (and which has access to data memory **110**). CPU **106** also communicates with a conventional keyboard **112,** display **114** (e.g., an LCD) and audio transducer or speaker **116.** A portion of program and/or data memory **110a** is available for storing one or more passwords associated with unique version data (e.g., denoted PWₙ.Vₙ for the nth password PW stored in association with corresponding nth version data V). Suitable computer program executable code is stored in portions of program memory **108** to constitute the password-associated storage and checking logic described below.

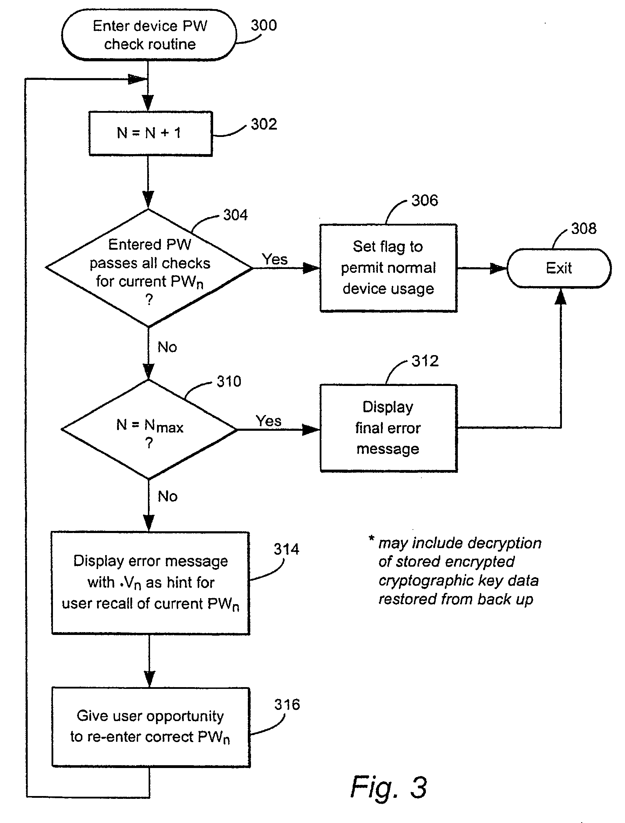

The program logic module in FIG. **3** for checking a device password is entered at **300.** If multiple opportunities for password entry and checking are desired, then a suitable loop counter N may be incremented at **302.** One or more password checks are effected at **304** to ascertain whether the entered password PW is actually the correct current password PWₙ. As noted above, the entered password PW may actually be needed for decryption of stored encrypted cryptographic private key data that has been restored from some earlier backup - and thus possibly having been protected with a password that is different from what the user currently expects. Those in the art will understand that the password checking performed at **304** may include very sophisticated multiple checks of passwords (possibly including checking for a duress password as described in copending and commonly assigned application Serial No. 10/835,260 filed April 30, 2004 naming Michael S. Brown, Neil P. Adams, Herbert A. Kittle, Michael G. Kirkup, Michael K. Brown, Ian M. Robertson and Jonathan F. Hammell as inventors, the entire content of which is hereby incorporated by reference).

If the entered password is determined to be correct at **304,** then a flag may be set at **306** to permit normal device usage before exiting the routine at **308.** Of course, those in the art will understand many different techniques may be used to permit normal device usage once the password check has been successfully completed. For example, depending upon how the controlling software has been devised and configured, it may not be necessary to set any flag at all but, rather, to merely exit the routine with a jump to a normal operating routine.

However, if the entered password does not check out as being correct, then a loop counter check may be made at **310** (assuming that a loop counter is utilized). If the maximum number of attempts have already been reached, then a final error message may be displayed at **312** and an exit from the routine may be made **308** (albeit in such a manner as not to permit normal device usage).

Assuming that another attempt at password entry is permitted, then an error message is displayed at **314** using the associated version data Vₙ as a hint for assisting in user recall of the current effective password PWₙ (which may actually be the password associated with earlier version data from a backup restoration). The user is then given another opportunity to re-enter the correct password at **316** before the routine loop is again executed as depicted in FIG. **3.**

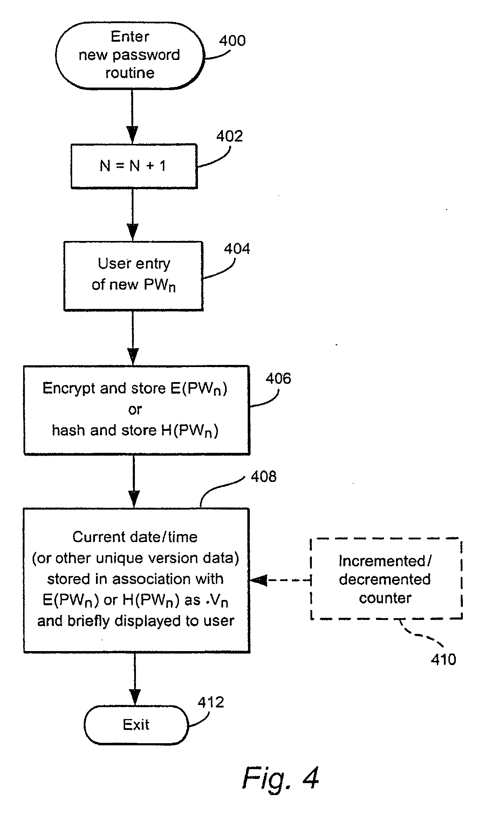

The program logic of FIG. **4** may be entered at **400** so as to permit user entry of a new password. Here, if desired, a version number counter n may be incremented at **402** to, at least temporarily, be associated with the user's entry of a new password PWₙ at **404.** As those in the art will appreciate, the usual and conventional techniques for permitting user entered digital data using a keyboard and visual display screen may typically be employed. If desired, the newly entered password data PWₙ may be encrypted at **406** and stored.

In one exemplary embodiment, unique versioning data is associated with the newly entered password data (possibly hashed or encrypted) at **408.** In this exemplary embodiment, the current date/time (or other unique version data) is stored in association with the encrypted newly entered password data E(PWₙ) as Vn. If desired, this may be at least briefly displayed to the user (especially if time of day rather than merely date data is employed as part of the version data). Of course, the version counter n or some more permanent (and perhaps sophisticated) version counter (or random number generator) **410** may be incremented and/or decremented to provide a unique integer version number Vn for association with the newly entered user defined password PWₙ as depicted in dotted lines at **410.** Once the new password has been properly defined and stored in association with unique version data, then the routine is exited at **412.**

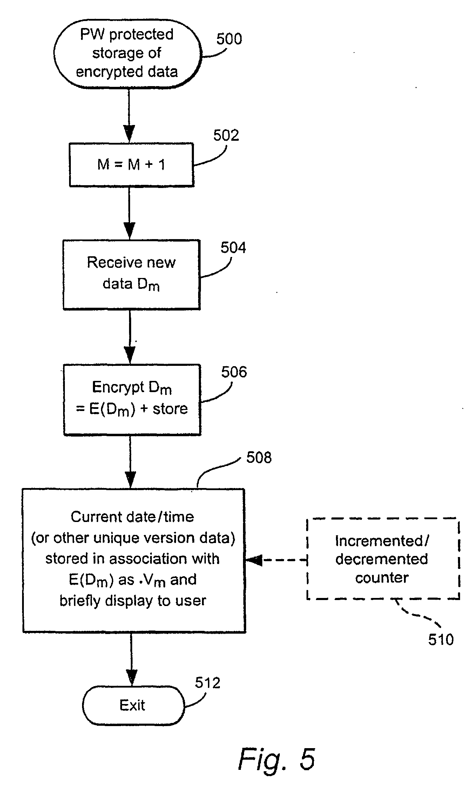

The program logic of FIG. **5** is similar to that of FIG. **4** and may be entered at **500** for user storage of encrypted data of any desired type (e.g., possibly something other than a cryptographic key). The elements of the program logic routine in FIG. **5** that are analogous to those already shown and explained in respective FIG. **4** are denoted in FIG. **5** using the same two least significant digits for element numbers. Accordingly, it is believed that those skilled in the art will readily understand FIG. **5** and the context of the earlier description already given for FIG. **4.**

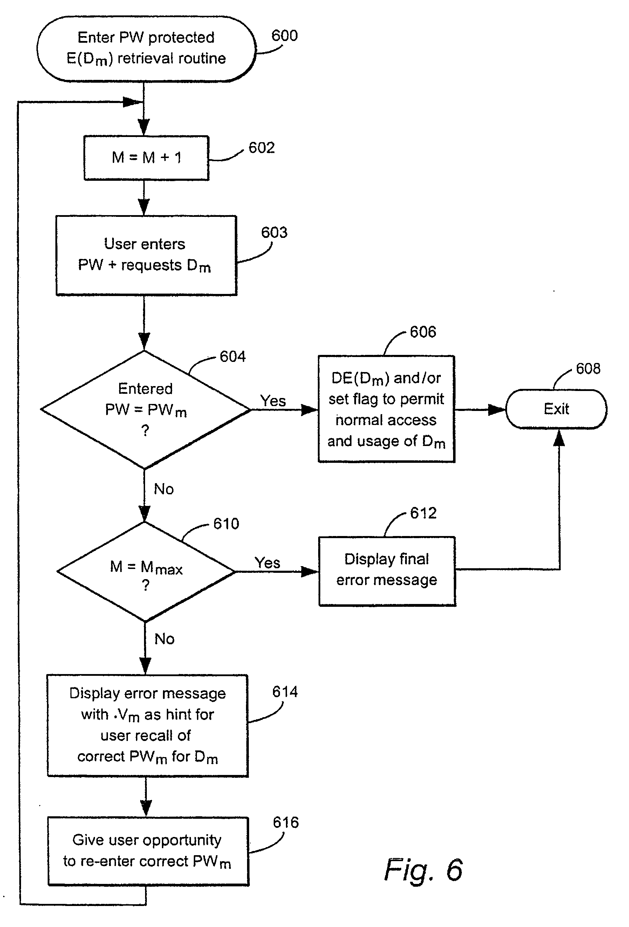

The program logic depicted in FIG. **6** permits the user to retrieve password protected encrypted data stored in accordance with FIG. 5. It is similar and analogous to the program logic already described in FIG. **3.** The directly analogous segments of this program logic has been assigned reference numerals using the same two least significant digits and thus should be directly understood by those skilled in the art in reference to FIG. **3** and the earlier provided description thereof with respect to password checking. However, in FIG. **6,** a separate element **603** has been more explicitly depicted for the user to enter a desired password PW and a request for some particular previously encrypted and stored data Dₘ. That is, while the program logic of FIG. **3** is more explicitly directed to checking for the current device password PWₙ, the program logic of FIG. **6** may be utilized for retrieving any one of a number of previously encrypted and stored data sets Dₘ which may have a corresponding number of different passwords PWₘ respectively associated therewith. Accordingly, the user may be required at **603** to identify a particular data set Dₘ in addition to supplying a password PW that is believed to be the password PWₘ associated with that particular data set.

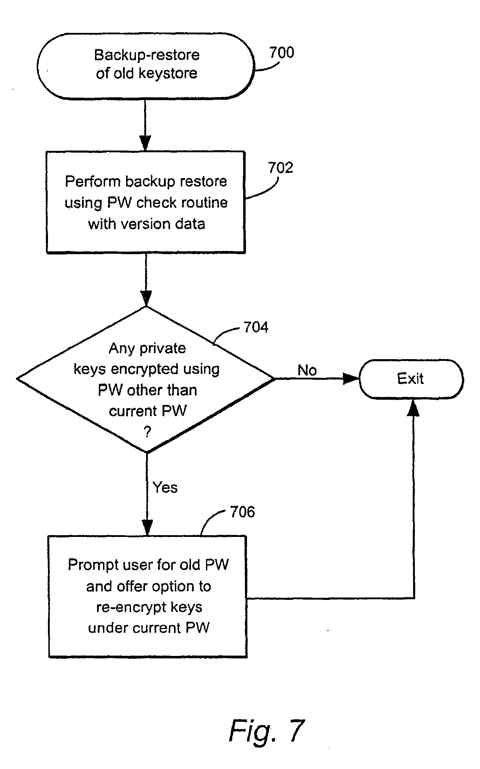

As depicted in FIG. 7, after doing a backup-restore of an old keystore at **700, 702,** it is preferable to check at **704** to see if there are any private keys encrypted using an old password. If any are found, the user is then prompted at **706** for the old password and to re-encrypt the keys under the new keystore password. The benefit to the user is that he/she does not need to remember the old password anymore.

A user's private keys may be encrypted with a Key Store password. The user also may have the ability to backup and restore those encrypted keys. It is possible, though, for the user to change the password. This can cause problems. If the user backs up the keys, changes his/her password, and then restores the old keys, how does the device know what password to ask for when trying to decrypt the restored keys?

This problem is solved by employing password version data. For example, an integer (or a user readable data string representation of version data such as date/time) may be stored in association with the encrypted copy of some data to identify which password was used to protect that data.

In order to make this user friendly, the time that the password was set can be used as the password version data. The benefit of this, versus just using an incremented counter content, is that it provides a cue to help jog the user's memory. So rather than asking:
"This key was protected with an older password. Please enter it to decrypt the key."
we can instead ask:
"This key was protected with a password from June 1, 2004. Please enter it to decrypt the key."

Another benefit of this method is that it provides a cue to the user, without revealing any useful information about the password to an attacker. Providing a clue such as "Your password begins with 'm' and ends in 'wave'," while helpful to the user, aids the attacker as well.

While the invention has been described in connection with what is presently considered to be the most practical and preferred exemplary embodiments, it is to be understood that the invention is not limited to the disclosed embodiments, but, on the contrary, is intended to cover all variations, modifications and equivalent arrangements included within the scope of the appended claims.

## Claims

1. A method for use in an electronic device (100) including password protected functionality using a password that can be changed by the user and having stored password recollection hints that can be presented to a user to assist in user recollection of a correct password, said method being **characterized by**:
storing a user-specified password in association with automatically generated unique version data (408, 508) that is subsequently provided (314, 614) to help user recall of the password associated therewith.

2. A method as in claim 1 wherein said automatically generated version data identifies at least the date on which the associated password was defined by the user.

3. A method as in claim 1 wherein said automatically generated version data for successively defined passwords has respective successively increasing or decreasing value.

4. A method as in claim 3 wherein said automatically generated version data corresponds to counter data that is incremented or decremented at least once for each newly defined password; and/or
wherein said automatically generated version data identifies at least the chronological date on which the associated password was defined by the user.

5. A method as in claim 1 wherein said password protected functionality decrypts stored cryptographic key data; and/or
wherein said password protected functionality decrypts cryptographic key data that has been restored from backed-up data.

6. A method as in claim 1 wherein said automatically generated version data is integer valued; and/or
wherein said automatically generated version data comprises a data string; and/or
wherein said automatically generated version data is stored in association with encrypted data and corresponds to a password used during encryption of said encrypted data.

7. A method as in claim 1 further comprising:
using said automatically generated unique version data to prompt a user to re-encrypt backup-restored cryptographic key data under a different and current password.

8. An electronic device (100) including password protected functionality using a password that can be changed by the user and having stored password recollection hints that can be presented to a user to assist in user recollection of a correct password, said device being **characterized by**:
means (408, 508) for storing a user-specified password in association with automatically generated unique version data (408, 508); and
means (314, 614) for subsequently providing said automatically generated unique version data to help user recall of the password associated therewith.

9. A device as in claim 8 including means for causing said automatically generated version data to identify at least the date on which the associated password was defined by the user.

10. A device as in claim 8 including means for causing said automatically generated version data for successively defined passwords to have respective successively increasing or decreasing value.

11. A device as in claim 10 including means for causing said automatically generated version data to correspond to counter data that is incremented or decremented at least once for each newly defined password; and/or
including means for causing said automatically generated version data to identify at least the chronological date on which the associated password was defined by the user.

12. A device as in claim 8 including means for causing said password protected functionality to decrypt stored cryptographic key data; and/or
including means for causing said password protected functionality to decrypt cryptographic key data that has been restored from backed-up data.

13. A device as in claim 8 including means for causing said automatically generated version data to be integer valued; and/or
wherein said automatically generated version data comprises a data string; and/or
including means for causing said automatically generated version data to be stored in association with encrypted data and to correspond to a password used during encryption of said encrypted data.

14. A device as in claim 8 further comprising:
means for using said automatically generated unique version data to prompt a user to re-encrypt backup-restored cryptographic key data under a different and current password.

15. A computer program storage medium (108, 110) carrying a computer program for an electronic device (100) including password protected functionality using a password that can be changed by the user and having stored password recollection hints that can be presented to a user to assist in user recollection of a correct password, said program being capable, when executed, of effecting a method that is **characterized by**:
storing (408, 508) a user-specified password in association with automatically generated unique version data that is subsequently provided (314, 614) to help user recall of the password associated therewith.

16. A computer program storage medium as in claim 15 wherein said automatically generated version data identifies at least the date on which the associated password was defined by the user.

17. A computer program storage medium as in claim 15 wherein said automatically generated version data for successively defined passwords has respective successively increasing or decreasing value.

18. A computer program storage medium as in claim 15 wherein said automatically generated version data corresponds to counter data that is incremented or decremented at least once for each newly defined password; and/or
wherein said automatically generated version data identifies at least the chronological date on which the associated password was defined by the user.

19. A computer program storage medium as in claim 15 wherein said password protected functionality decrypts stored cryptographic key data; and/or
wherein said password protected functionality decrypts cryptographic key data that has been restored from backed-up data.

20. A computer program storage medium as in claim 15 wherein said automatically generated version data is integer valued; and/or
wherein said automatically generated version data comprises a data string; and/or
wherein said automatically generated version data is stored in association with encrypted data and corresponds to a password used during encryption of said encrypted data.

21. A computer program storage medium as in claim 15 further comprising:
using said automatically generated unique version data to prompt a user to re-encrypt backup-restored cryptographic key data under a different and current password.

## Patentansprüche

1. Verfahren zur Verwendung in einer elektronischen Vorrichtung (100), umfassend eine Passwort-geschützte Funktionalität, die ein Passwort verwendet, welches durch den Benutzer geändert werden kann, und gespeicherte Passwort-Erinnerungshinweise aufweist, welche einem Benutzer bereitgestellt werden können, um diesen in einer Benutzer-Erinnerung eines richtigen Passwortes zu unterstützen, wobei das Verfahren **gekennzeichnet ist durch**:
Speichern eines Benutzer-spezifischen Passwortes in Zuordnung zu automatisch erzeugten, eindeutigen Versionsdaten (408, 508), die nachfolgend bereitgestellt werden (314, 614), um einem Benutzer bei einem Wiederabruf des damit zugeordneten Passwortes zu helfen.

2. Verfahren nach Anspruch 1, wobei die automatisch erzeugten Versionsdaten wenigstens das Datum, zu welchem das zugeordnete Passwort durch den Benutzer definiert wurde, identifizieren.

3. Verfahren nach Anspruch 1, wobei die automatisch erzeugten Versionsdaten für nachfolgend definierte Passwörter einen entsprechend nachfolgend zunehmenden oder abnehmenden Wert aufweisen.

4. Verfahren nach Anspruch 3, wobei die automatisch erzeugten Versionsdaten Zählerdaten entsprechen, die wenigstens einmal für jedes neu definierte Passwort erhöht oder vermindert werden, und/oder
wobei die automatisch erzeugten Versionsdaten wenigstens das chronologische Datum, zu welchem das zugeordnete Passwort durch den Benutzer definiert wurde, identifizieren.

5. Verfahren nach Anspruch 1, wobei die Passwort-geschützte Funktionalität gespeicherte kryptographische Schlüsseldaten entschlüsselt, und/oder
wobei die Passwort-geschützte Funktionalität kryptographische Schlüsseldaten, die von gesicherten Daten gespeichert worden sind, entschlüsselt.

6. Verfahren nach und Anspruch 1, wobei die automatisch erzeugten Versionsdaten ganzzahlig bewertet werden, und/oder
wobei die automatisch erzeugten Versionsdaten eine Datenfolge umfassen, und/oder
wobei die automatisch erzeugten Versionsdaten in Zuordnung zu verschlüsselten Daten gespeichert werden und einem Passwort, das während einer Verschlüsselung der verschlüsselten Daten verwendet wird, entsprechen.

7. Verfahren nach Anspruch 1, weiterhin umfassend:
Verwenden der automatisch erzeugten, eindeutigen Versionsdaten, um einen Benutzer aufzufordern, Sicherungs-gespeicherte kryptographische Schlüsseldaten unter einem unterschiedlichen und aktuellen Passwort zu verschlüsseln.

8. Elektronischen Vorrichtung (100), umfassend eine Passwort-geschützte Funktionalität, die ein Passwort verwendet, welches durch den Benutzer geändert werden kann, und gespeicherte Passwort-Erinnerungshinweise aufweist, welche einem Benutzer bereitgestellt werden können, um diesen in einer Benutzer-Erinnerung eines richtigen Passwortes zu unterstützen, wobei die Vorrichtung **gekennzeichnet ist durch**:
Eine Einrichtung (408, 508) zum Speichern eines Benutzer-spezifischen Passwortes in Zuordnung zu automatisch erzeugten, eindeutigen Versionsdaten (408, 508), und
eine Einrichtung (314, 614) zum nachfolgenden Bereitstellen der automatisch erzeugten, eindeutigen Versionsdaten, um einem Benutzer bei einem Wiederabruf des damit zugeordneten Passwortes zu helfen.

9. Vorrichtung nach Anspruch 8, umfassend eine Einrichtung zum Veranlassen der automatisch erzeugten Versionsdaten, wenigstens das Datum, zu welchem das zugeordnete Passwort durch den Benutzer definiert wurde, zu identifizieren.

10. Vorrichtung nach Anspruch 8, umfassend eine Einrichtung zum Veranlassen der automatisch erzeugten Versionsdaten, für nachfolgend definierte Passwörter einen entsprechend nachfolgend zunehmenden oder abnehmenden Wert aufzuweisen.

11. Vorrichtung nach Anspruch 10, umfassend eine Einrichtung zum Veranlassen der automatisch erzeugten Versionsdaten, Zählerdaten zu entsprechen, die wenigstens einmal für jedes neu definierte Passwort erhöht oder vermindert sind, und/oder
umfassend eine Einrichtung zum Veranlassen der automatisch erzeugten Versionsdaten, wenigstens das chronologische Datum, zu welchem das zugeordnete Passwort durch den Benutzer definiert wurde, zu identifizieren.

12. Vorrichtung nach Anspruch 8, umfassend eine Einrichtung zum Veranlassen der Passwort-geschützten Funktionalität, gespeicherte kryptographische Schlüsseldaten zu entschlüsseln, und/oder
umfassend eine Einrichtung zum Veranlassen der Passwort-geschützten Funktionalität, kryptographische Schlüsseldaten, die von gesicherten Daten gespeichert worden sind, zu entschlüsseln.

13. Vorrichtung nach Anspruch 8, umfassend eine Einrichtung zum Veranlassen der automatisch erzeugten Versionsdaten, ganzzahlig bewertet zu werden, und/oder
wobei die automatisch erzeugten Versionsdaten eine Datenfolge umfassen, und/oder
umfassend eine Einrichtung zum Veranlassen der automatisch erzeugten Versionsdaten, in Zuordnung zu verschlüsselten Daten zu speichern und einem Passwort, das während einer Verschlüsselung der verschlüsselten Daten verwendet ist, zu entsprechen.

14. Vorrichtung nach Anspruch 8, weiterhin umfassend:
Eine Einrichtung zum Verwenden der automatisch erzeugten, eindeutigen Versionsdaten, um einen Benutzer aufzufordern, Sicherungs-gespeicherte kryptographische Schlüsseldaten unter einem unterschiedlichen und aktuellen Passwort zu verschlüsseln.

15. Computerprogramm-Speichermedium (108, 110), das ein Computerprogramm für eine elektronische Vorrichtung (100) trägt, umfassend eine Passwort-geschützte Funktionalität, die ein Passwort verwendet, welches durch den Benutzer geändert werden kann, und gespeicherte Passwort-Erinnerungshinweise aufweist, welche einem Benutzer bereitgestellt werden können, um diesen in einer Benutzer-Erinnerung eines richtigen Passwortes zu unterstützen, wobei das Programm, wenn ausgeführt, zum Durchführen eines Verfahrens in der Lage ist, welches **gekennzeichnet ist durch**:
Speichern eines Benutzer-spezifischen Passwortes in Zuordnung zu automatisch erzeugten, eindeutigen Versionsdaten, die nachfolgend bereitgestellt werden (314, 614), um einem Benutzer bei einem Wiederabruf des damit zugeordneten Passwortes zu helfen.

16. Computerprogramm-Speichermedium nach Anspruch 15, wobei die automatisch erzeugten Versionsdaten wenigstens das Datum, zu welchem das zugeordnete Passwort durch den Benutzer definiert wurde, identifizieren.

17. Computerprogramm-Speichermedium nach Anspruch 15, wobei die automatisch erzeugten Versionsdaten für nachfolgend definierte Passwörter einen entsprechend nachfolgend zunehmenden oder abnehmenden Wert aufweisen.

18. Computerprogramm-Speichermedium nach Anspruch 15, wobei die automatisch erzeugten Versionsdaten Zählerdaten entsprechen, die wenigstens einmal für jedes neu definierte Passwort erhöht oder vermindert werden, und/oder
wobei die automatisch erzeugten Versionsdaten wenigstens das chronologische Datum, zu welchem das zugeordnete Passwort durch den Benutzer definiert wurde, identifizieren.

19. Computerprogramm-Speichermedium nach Anspruch 15, wobei die Passwort-geschützte Funktionalität gespeicherte kryptographische Schlüsseldaten entschlüsselt, und/oder
wobei die Passwort-geschützte Funktionalität kryptographische Schlüsseldaten, die von gesicherten Daten gespeichert worden sind, entschlüsselt.

20. Computerprogramm-Speichermedium nach Anspruch 15, wobei die automatisch erzeugten Versionsdaten ganzzahlig bewertet werden, und/oder
wobei die automatisch erzeugten Versionsdaten eine Datenfolge umfassen, und/oder
wobei die automatisch erzeugten Versionsdaten in Zuordnung zu verschlüsselten Daten gespeichert sind und einem Passwort, das während einer Verschlüsselung der verschlüsselten Daten verwendet wird, entsprechen.

21. Computerprogramm-Speichermedium nach Anspruch 15, weiterhin umfassend:
Verwenden der automatisch erzeugten, eindeutigen Versionsdaten, um einen Benutzer aufzufordern, Sicherungs-gespeicherte kryptographische Schlüsseldaten unter einem unterschiedlichen und aktuellen Passwort zu verschlüsseln.

## Revendications

1. Procédé destiné à une utilisation dans un dispositif électronique (100) comprenant une fonctionnalité protégée par un mot de passe utilisant un mot de passe qui peut être modifié par l'utilisateur et comportant des indications de souvenir de mots de passe stockés qui peuvent être présentées à un utilisateur pour aider l'utilisateur à se souvenir d'un mot de passe correct, ledit procédé étant **caractérisé par** :
le stockage d'un mot de passe spécifié par l'utilisateur en association avec une donnée à version unique générée automatiquement (408, 508) qui est ultérieurement fournie (314, 614) pour aider l'utilisateur à se souvenir du mot de passe qui lui est associé.

2. Procédé selon la revendication 1, dans lequel ladite donnée de version générée automatiquement identifie au moins la date à laquelle le mot de passe associé a été défini par l'utilisateur.

3. Procédé selon la revendication 1, dans lequel ladite donnée de version générée automatiquement pour des mots de passe définis successivement possède une valeur respective successivement croissante ou décroissante.

4. Procédé selon la revendication 3, dans lequel ladite donnée de version générée automatiquement correspond à une donnée de compteur qui est incrémentée ou décrémentée au moins une fois pour chaque mot de passe nouvellement défini ; et/ou
dans lequel ladite donnée de version générée automatiquement identifie au moins la date chronologique à laquelle le mot de passe associé a été défini par l'utilisateur.

5. Procédé selon la revendication 1, dans lequel ladite fonctionnalité protégée par un mot de passe déchiffre une donnée de clé cryptographique stockée ; et/ou
dans lequel ladite fonctionnalité protégée par un mot de passe déchiffre une donnée de clé cryptographique qui a été restaurée à partir de données sauvegardées.

6. Procédé selon la revendication 1, dans lequel ladite donnée de version générée automatiquement possède une valeur entière ; et/ou
dans lequel ladite donnée de version générée automatiquement comprend une chaîne de données ; et/ou
dans lequel ladite donnée de version générée automatiquement est stockée en association avec des données chiffrées et correspond à un mot de passe utilisé durant le chiffrement desdites données chiffrées.

7. Procédé selon la revendication 1, comprenant de plus :
l'utilisation de ladite donnée de version unique générée automatiquement pour inviter un utilisateur à rechiffrer des données de clé cryptographique restaurées à partir d'une sauvegarde sous un mot de passe courant et différent.

8. Dispositif électronique (100) comprenant une fonctionnalité protégée par un mot de passe utilisant un mot de passe qui peut être modifié par l'utilisateur et possédant des indications de souvenir de mots de passe stockés qui peuvent être présentées à un utilisateur pour aider l'utilisateur à se souvenir d'un mot de passe correct, ledit dispositif étant **caractérisé par** :
un moyen (408, 508) pour stocker un mot de passe spécifié par l'utilisateur en association avec une donnée de version unique générée automatiquement (408, 508) ; et
un moyen (314, 614) pour fournir ultérieurement ladite donnée de version unique générée automatiquement afin d'aider l'utilisateur à se souvenir du mot de passe qui y est associé.

9. Dispositif selon la revendication 8, comprenant un moyen pour provoquer l'identification par ladite donnée de version générée automatiquement d'au moins la date à laquelle le mot de passe associé a été défini par l'utilisateur.

10. Dispositif selon la revendication 8, comprenant un moyen destiné à provoquer le fait que ladite donnée de version générée automatiquement pour des mots de passe successivement définis possède une valeur respective successivement croissante ou décroissante.

11. Dispositif selon la revendication 10, comprenant un moyen destiné à provoquer le fait que ladite donnée de version générée automatiquement correspond à une donnée de compteur qui est incrémentée ou décrémentée au moins une fois pour chaque mot de passe nouvellement défini ; et/ou
comprenant un moyen destiné à provoquer l'identification par ladite donnée de version générée automatiquement d'au moins la date chronologique à laquelle le mot de passe associé a été défini par l'utilisateur.

12. Dispositif selon la revendication 8, comprenant un moyen destiné à provoquer le déchiffrement par ladite fonctionnalité protégée par un mot de passe d'une donnée de clé cryptographique stockée ; et/ou
comprenant un moyen pour provoquer le déchiffrement par ladite fonctionnalité protégée par un mot de passe d'une donnée de clé cryptographique qui a été restaurée à partir de données sauvegardées.

13. Dispositif selon la revendication 8, comprenant un moyen pour provoquer le fait que ladite donnée de version générée automatiquement possède une valeur entière ; et/ou
dans lequel ladite donnée de version générée automatiquement comprend une chaîne de données et/ou
comprenant un moyen destiné à provoquer le stockage de ladite donnée de version générée automatiquement en association avec des données chiffrées et la correspondance de ladite donnée de version générée automatiquement avec un mot de passe utilisé durant le chiffrement desdites données chiffrées.

14. Dispositif selon la revendication 8, comprenant de plus :
un moyen destiné à l'utilisation de ladite donnée de version unique générée automatiquement pour inviter un utilisateur à rechiffrer des données de clé cryptographique restaurées à partir d'une sauvegarde sous un mot de passe courant et différent.

15. Support de stockage de programme informatique (108, 110) portant un programme informatique pour un dispositif électronique (100) comprenant une fonctionnalité protégée par un mot de passe utilisant un mot de passe qui peut être modifié par l'utilisateur et possédant des indications de souvenir de mots de passe stockés qui peuvent être présentées à un utilisateur pour aider l'utilisateur à se souvenir d'un mot de passe correct, ledit programme étant capable, quand il est exécuté, d'effectuer un procédé **caractérisé par** :
le stockage (408, 508) d'un mot de passe spécifié par l'utilisateur en association avec une donnée de version unique générée automatiquement, qui est fournie ultérieurement (314, 614) pour aider l'utilisateur à se souvenir du mot de passe qui lui est associé.

16. Support de stockage de programme informatique selon la revendication 15, dans lequel ladite donnée de version générée automatiquement identifie au moins la date à laquelle le mot de passe associé a été défini par l'utilisateur.

17. Support de stockage de programme informatique selon la revendication 15, dans lequel ladite donnée de version générée automatiquement pour des mots de passe successivement définis possède une valeur respective successivement croissante ou décroissante.

18. Support de stockage de programme informatique selon la revendication 15, dans lequel ladite donnée de version générée automatiquement correspond à une donnée de compteur qui est incrémentée ou décrémentée au moins une fois pour chaque mot de passe nouvellement défini ; et/ou
dans lequel ladite donnée de version générée automatiquement identifie au moins la date chronologique à laquelle le mot de passe associé a été défini par l'utilisateur.

19. Support de stockage de programme informatique selon la revendication 15, dans lequel ladite fonctionnalité protégée par un mot de passe déchiffre une donnée de clé cryptographique stockée ; et/ou
dans lequel ladite fonctionnalité protégée par un mot de passe déchiffre une donnée de clé cryptographique qui a été restaurée à partir de données sauvegardées.

20. Support de stockage de programme informatique selon la revendication 15, dans lequel ladite donnée de version générée automatiquement possède une valeur entière ; et/ou dans lequel ladite donnée de version générée automatiquement comprend une chaîne de données ; et/ou
dans lequel ladite donnée de version générée automatiquement est stockée en association avec des données chiffrées et correspond à un mot de passe utilisé durant le chiffrement desdites données chiffrées.

21. Support de stockage de programme informatique selon la revendication 15, comprenant de plus :
l'utilisation de ladite donnée de version unique générée automatiquement pour inviter un utilisateur à rechiffrer une donnée de clé cryptographique restaurée à partir d'une sauvegarde sous un mot de passe courant et différent.
